# EUROPÄISCHE PATENTSCHRIFT

(11) **EP 0 430 310 B1**
(45) Veröffentlichungstag und Bekanntmachung des Hinweises auf die Patenterteilung: **06.12.1995**
(21) Anmeldenummer: 90123533.3
(22) Anmeldetag: 03.04.1986
(51) Int. Cl.: B29D 29/00, B29D 31/00, A44C 5/00

(54) **Gegenstand, insbesondere Uhrband od.dgl.**
Article, particularly watchband or similar
Objet, en particulier bracelet de montre ou similaire

(30) Priorität: 15.04.1985 AT 1123/85
(43) Veröffentlichungstag der Anmeldung: 05.06.1991
(62) Teilanmeldung aus: 86890093.7
(73) Patentinhaber: Hirsch Armbänder Gesellschaft m.b.H., 9021 Klagenfurt (Kärnten) (AT)
(72) Erfinder: Hirsch, Hermann, A-9021 Klagenfurt (AT)
(74) Vertreter: Rau, Manfred, Dr. Dipl.-Ing.

(56) Entgegenhaltungen:
- EP-A- 0 097 638
- CH-A- 572 390
- FR-A- 2 505 628
- US-A- 4 110 139

## Beschreibung

Die Erfindung betrifft einen Gegenstand, insbesondere Uhrband, Kugelschreibergehäuse, Schmuckschatulle, Koffer für Spiele, Schreibtischauflage, Gürtel, Ball, ringförmigen Gegenstand, wie Schubschlaufe od.dgl., mit den im Oberbegriff des Auspruches 1 angegebenen Merkmalen.

Bislang ist man bei der Herstellung von aus Leder oder lederähnlichem Werkstoff und einer damit verbundenen Lage aus einem Kunststoff bestehenden Gegenständen so vorgegangen, daß man die beiden Lagen unter Zuhilfenahme eines Klebstoffes miteinander verklebt hat. Diese Verfahrensweise hat den Nachteil, daß die so erhaltenen, zusammengesetzten Werkstoffe in weiteren, u.U. recht aufwendigen Arbeitsschritten zu den endgültigen Gegenständen verarbeitet werden müssen. Dabei ergeben sich zwangsweise Schnittkanten im Werkstoff aus Leder oder lederähnlichem Werkstoff, die wegen des dort möglichen Eintrittes von Feuchtigkeit in das Leder nachteilig sind. Überdies war man bei der Herstellung räumlicher Gebilde gezwungen, komplizierte Zuschnitte anzufertigen, die man dann durch Nähen, Kleben, Schweißen u. dgl. zu dem räumlichen Gegenstand fertigstellt.

Aus der CH-A-572 390 ist es bekannt, zur Herstellung von Uhrbändern die Ränder eines Zuschnittes aus Leder nur teilweise mit Kunststoff zu bedecken.

Dies hat zur Folge, daß das Uhrband ästhetisch wenig ansprechend ist und daß ein insgesamt nicht zufriedenstellender Verbund zwischen dem Zuschnitt und der Lage aus Kunststoff gegeben ist.

EP-A-0 097 638 zeigt einen gattungsgemäßen Gegenstand in Form eines beispielsweise für ein Uhrband verwendeten Riemens, bei dem auf beiden Seiten einer elastischen Kunststoff-Zwischenschicht Zuschnitte aus Leder vorhanden sind. Die äußeren Kanten der Längsränder des Riemens werden dabei allein von der erwähnten Zwischenschicht gebildet. Die Druckschrift zeigt also einen standardmäßigen Sandwichaufbau eines Riemens aus drei Schichten, bei dem zwei voneinander getrennte und distanzierte Deckschichten aus Leder beiderseits auf einer Kernschicht angeordnet sind.

Derartige standardmäßige Sandwichaufbauten von z.B. Uhrbändern sind herstellungstechnisch relativ aufwendig und - wie die Erfahrung gezeigt hat - anfällig gegen Zerstörung, was in erster Linie im dreischichtigen Sandwichaufbau selbst begründet ist.

US-A-4 110 139 zeigt ein Uhrarmband, welches aus mehreren Folien besteht. Dieses Mehrlagenlaminat wird in einem Schweißvorgang in den Kantenbereichen des Bandes miteinander verbunden, wonach das verschweißte Laminat mittels Hochfrequenz erhitzt wird, so daß die einzelnen Lagen aufschäumen und eine als Band ausgebildete Raumform ergeben. Insofern wird dieser Gegenstand in seiner Raumform durch die Erweichung und Formänderung der zuvor miteinander verschweißten Folien hergestellt, wobei vor es allem bei den unterschiedlichen Aufschäumvorgängen zu nicht exakt kontrollierbaren Lageveränderungen und Haftungsunterschieden zwischen den Schichten in dem derart hergestellten Band kommen kann.

FR-A-2 505 628 zeigt einen sogenannnten Rembordiervorgang, bei dem die gesamten Seitenränder eines Futterleders von einer Decklage umfaßt werden. Es handelt sich hier um ein Verbindungsverfahren zwischen zwei Lederteilen, für das speziell vorbereitete Lederteile verwendet werden müssen. Bei letzteren handelt es sich um randseitig angeschärfte Zuschnitte, die einen bündigen Übergang erst ermöglichen.

Der Erfindung liegt die Aufgabe zugrunde, einen Gegenstand der gattungsgemäßen Art so weiterzubilden, daß er insbesondere in seinem Kantenbereich ästhetisch ansprechend gestaltet ist, daß der Verbund zwischen den einzelnen Schichten des Gegenstandes erheblich verbessert und daß dieser hautfreundlicher ausgebildet ist.

Diese Aufgabe wird durch die im Anspruch 1 angegebenen Merkmale gelöst. Demnach ist der Gegenstand zweischichtig aus dem einzigen Zuschnitt aus Leder oder lederähnlichem Werkstoff und einer Lage aus Kunststoff ausgebildet, wobei die Lage aus Kunststoff so um die Ränder des Zuschnitts herumgeformt ist, daß die Ränder des Gegenstandes teils durch den Zuschnitt und teils durch die Lage aus Kunststoff gebildet sind. Ferner verläuft die Außenfläche des Zuschnittes mit der Außenfläche der Lage aus Kunststoff bündig, wobei der Zuschnitt überall die gleiche Stärke besitzt und die Lage aus Kunststoff als einstückiges räumliches Gebilde ausgeformt ist.

Durch die vorstehende Ausgestaltung wird u.a. eine formschlüssige Verbindung zwischen dem Zuschnitt aus Leder oder Lederähnlichem Werkstoff und der Lage aus Kunststoff erreicht, wobei ein bündiger, also sprungstellenfreier Übergang zwischen dem Zuschnitt und der Lage aus Kunststoff erreicht wird und wobei gleichzeitig die Randbereiche des Zuschnittes durch den Kunststoff geschützt und fixiert sind. Es können weitgehend beliebige Zuschnitte aus Leder oder lederähnlichem Werkstoff, so auch sehr dünne Leder (flämmige Leder) zu gebrauchsfertigen Gegenständen verarbeitet werden. Von besonderem Vorteil ist es, daß bei Einsatz von Leder für den Zuschnitt die hiermit verbundene Lage aus Kunststoff alle Schnittkanten und die Fleischseite des Leders versiegelt. Dadurch ergibt sich nicht nur ein allseitiger Schutz des Zuschnittes, sondern es ist auch eine formschlüssige Verbindung zwischen dem Zuschnitt und der Lage aus Kunststoff gewährleistet.

Bei Verwendung von härtenden Kunststoffen empfiehlt es sich, einen Präpolymeren oder Monomeren einzusetzen.

In jedem Fall kann dem Kunststoff ein Treibmittel zugegeben werden um zu gewährleisten, daß die Lage aus Kunststoff im fertigen Gegenstand eine Schaumstruktur besitzt.

Der verwendete Kunststoff kann je nach der Bestimmung des erfindungsgemäß herstellbaren Gegenstandes von starr bzw. steif bis gummielastisch sein.

Als Kunststoffe sind alle Thermoplaste, Elastoplaste, thermoplastische Kautschuke, wie z.B. Polyurethan, Ionomere, Silikonkautschuk oder Duroplaste, Polyolefine, wie Polyäthylen und Polypropylen, sowie Polystyrole und viele andere mehr verwendbar.

Mittels der Lage aus Kunststoff können mit dem Zuschnitt aus Leder oder lederähnlichem Werkstoff auch weitere Teile verbunden sein. Derartige Teile können, wenn es sich bei dem Gegenstand um einen Riemen handelt, Schließen, Schnallen od. dgl. sein oder, wenn es sich bei dem Gegenstand um einen Koffer oder eine Tasche handelt, Beschläge oder Beschlagteile sein. Weiterhin können aus der Lage aus Kunststoff einstückig räumliche Gebilde ausgeformt sein. Derartige Gebilde können beispielsweise Ösen für die Verbindung von Uhrbändern mit den Stegen an Uhrgehäusen sein. Darüber hinaus ist es möglich, den mit dem Zuschnitt aus Leder oder lederähnlichem Werkstoff verbundenen Kunststoff unmittelbar zu Schließen oder Schließengegenstücken, die an den Enden der Riemen (Uhrbandteile) vorgesehen sind, auszuformen. Hierbei empfiehlt es sich, das Zwei-Komponenten-Spritzgießverfahren anzuwenden, da für den Kunststoff, der mit dem Zuschnitt aus Leder oder lederähnlichem Werkstoff verbunden ist, häufig andere Festigkeits- und Elastizitätseigenschaften gefordert werden als für den Kunststoff, der die Schließe od. dgl. bildet. Beim Zwei-Komponenten-Spritzgießverfahren werden unterschiedliche Kunststoffe, die gegebenenfalls auch unterschiedlich gefärbt sind, oder gleiche Kunststoffe mit unterschiedlicher Farbgebung nacheinander verarbeitet.

Bei Uhrbändern ist es auch möglich, mit dem Uhrband über den auf den Zuschnitt aufgebrachten Kunststoff Zierteile oder Federstifte zu verbinden, mittels welcher das Uhrband am Uhrgehäuse befestigt werden kann.

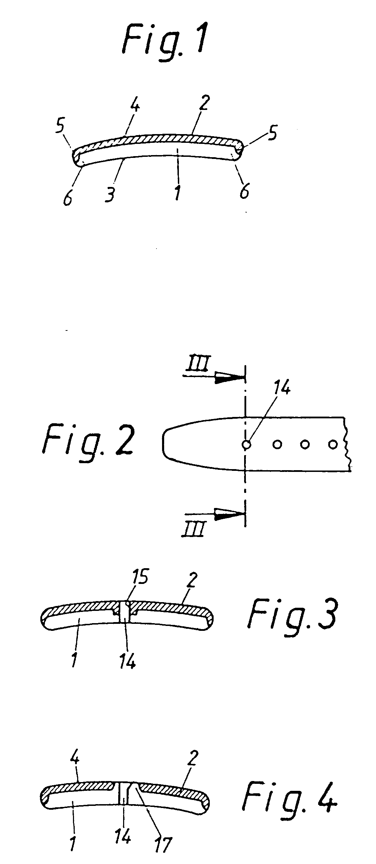

Nachstehend wird als Ausführungsbeispiel die Herstellung des in Figur 1 der angeschlossenen Zeichnungen im Querschnitt gezeigten Uhrbandes im Spritzgießverfahren beschrieben:
In eine Formhälfte einer Spritzgießform wird ein entsprechend zugeschnittener Lederstreifen 2 so in die Form eingelegt, daß sich seine Außenfläche 4 an die Formwand anlegt und durch im Bereich seiner Längsseitenränder 5 angelegte Vakuumöffnungen (beispielsweise ein ringsumlaufender Schlitz) an die Formhälfte angesaugt wird. Das Einlegen der Lage 2 in den Formhohlraum kann händisch oder mit Hilfe einer Umsetzvorrichtung erfolgen, die den zugeschnittenen Lederstreifen aus einer Schablone mit ebener Auflagefläche oder einem Vorratsmagazin definiert entnimmt und in die Formhälfte einlegt. Diese Verfahrensweise hat den Vorteil, daß die Lage 2 genau definiert in die Formhälfte eingelegt wird und so das wegen des angelegten Unterdruckes schwierige bzw. überhaupt unmögliche, nachträgliche Zurechtrücken der Lage entfallen kann. Dann wird die Form geschlossen.

Der die Lage 1 bildende Kunststoff, im vorliegenden Fall ein thermoplastischer Kautschuk (Polyurethan), wird in der Spritzeinheit aufgeschmolzen und in den Schneckenvorraum gefördert, wobei nach Vorhandensein einer ausreichenden Menge an Kunststoff die Schnecke zur Ausführung des Einspritzvorganges axial vorgeschoben und der Formhohlraum mit der Kunststoffschmelze ausgefüllt wird. Die Temperatur des Kunststoffes im Schneckenvorraum (Massetemperatur) beträgt etwa 250°C, die Temperatur des Werkzeuges im Mittel 40°C und der Einspritzdruck, das ist der Druck, mit dem die Schnecke axial beim Einspritzvorgang beaufschlagt wird, beträgt 100 bar.

Nach einer Kühlphase von 10 Sekunden wird die Form geöffnet und das Uhrband bzw. der Uhrbandteil kann entnommen werden, wobei natürlich auch ein automatischer Ausstoßer tätig werden kann.

Die Formhälfte, in welche die Lage aus Leder oder lederähnlichem Werkstoff eingelegt wird, kann gegenüber der anderen Formhälfte quer zur Schließrichtung verschiebbar (Schiebetisch, Rundtisch od.dgl.) sein um den Einlegevorgang zu vereinfachen.

Es sind die unterschiedlichsten Gegenstände herstellbar. Beispiele sind: Kleinlederwaren, Uhrbänder, Kugelschreibergehäuse, Schmuckschatullen, Lederkoffer, Ringbücher, Schreibtischauflagen, Lederknöpfe, Gürtel, Lederlenkräder, Lederhelme, Bälle, Koffer für Spiele, Feuerzeuge usw.

Ausführungsformen für Gegenstände sind in den Zeichnungen teilweise schematisch dargestellt. Es zeigen
- Fig. 1 bis 4: verschiedene Ausführungsformen von Uhrbändern.

Ein in Fig. 1 gezeigter Riemen besteht aus einer Lage 1 aus Kunststoff, beispielsweise Polyurethan, Polyäthylen, Äthylenvinylacetat, einem thermoplastischen Kautschuk, einem Polyamid od.dgl. elastischen Kunststoffen. Diese Lage 1 ist an ihrer Sichtseite mit einem Streifen 2 aus Leder oder lederähnlichem Werkstoff bedeckt. Wie aus Fig. 1 ersichtlich, ist die Außenfläche 3 der Lage 1 in den vom Streifen 2 nicht bedeckten Bereichen desselben mit der Außenfläche 4 des Streifens 2 bündig, so daß sich zwischen den beiden Werkstoffen, aus welchen der Riemen besteht, keine Stufen ergeben.

Wie aus Fig. 1 weiterhin ersichtlich, sind die Längsränder 5 des Streifens 2 um die Längsseitenränder 6 der Lage 1 aus Kunststoff herumgebogen, wobei die Längsränder 5 aber im Abstand von der Unterfläche des Riemens verlaufen.

Fig. 1 zeigt schließlich, daß die Längsränder 5 des Streifens 2, der einen länglich-flachen Querschnitt aufweist, spitz zulaufend ausgebildet sind.

Es ist ersichtlich, daß der Riemen quer zu seiner Längserstreckung gekrümmt sein kann.

Sind im erfindungsgemäßen Riemen Löcher 14 vorgesehen, dann gibt es verschiedene Möglichkeiten, diese auszubilden und nach dem erfindungsgemäßen Verfahren herzustellen.

Bei der in Fig. 2 und 3 gezeigten Ausführungsform, die vom in Fig. 1 gezeigten Riemen ausgeht, ist der Streifen 2 aus Leder oder lederähnlichem Werkstoff in das Loch 14 hineingezogen, so daß die Wandung des Loches zum Teil aus den in das Loch hineingezogenen Bereichen 15 des Streifens 2 besteht. Wie bei allen übrigen Ausführungsformen des Riemens ist auch bei dieser Ausführungsform im Bereich des Loches ein stufenloser Übergang zwischen dem Werkstoff des Kunststoffträgers 1 und dem Streifen 2 bzw. seinem in das Loch 14 hineingezogenen Bereich 15 vorgesehen.

Eine andere Möglichkeit, bei dem Riemen ein Loch auszubilden, zeigt Fig. 4. Dort ist im mit der Lage 1 aus Kunststoff verbundenen Streifen 2 ein Loch 17 vorgesehen, dessen Durchmesser größer ist als der Durchmesser des Loches 14 in der Lage 1. Der Werkstoff der Lage 1 erstreckt sich im Bereich des Loches 17 bis zur Außenfläche 4 des Streifens 2 und endet dort mit dieser bündig.

Es versteht sich, daß auch Kombinationen der in den Fig. 3 und 4 gezeigten Ausführungsformen möglich sind, wobei beispielsweise an der Unterfläche des Riemens die in Fig. 4 gezeigte Ausführungsform und an der Sichtfläche des Riemens die in Fig. 3 gezeigte Ausführungsform verwirklicht sein kann.

Ein Vorteil besteht auch darin, daß man auch mit Streifen aus Leder oder lederähnlichem Werkstoff, die überall die gleiche Stärke besitzen, beispielsweise keilförmige Riemen, d.h. Riemen, die von einem zum anderen Ende hin dünner werden, einfach dadurch herstellen kann, daß man eine entsprechend keilförmige Lage 1 formt.

Darüber hinaus lassen sich bei Verwendung entsprechender Formen auch bei Verwendung von Streifen, die überall gleich stark sind, beliebige Oberflächenstrukturen erzeugen. Das mühsame und zeitaufwendige Zurichten (Verdünnen und Anschärfen) von Leder oder lederähnlichen Werkstoffen entfällt dann.

## Patentansprüche

1. Gegenstand, insbesondere Uhrband, Kugelschreibergehäuse, Schmuckschatulle, Koffer für Spiele, Schreibtischauflage, Gürtel, Ball, ringförmiger Gegenstand, wie Schubschlaufe, od.dgl., mit einem Zuschnitt (2,) aus Leder oder lederähnlichem Werkstoff und einer an den Zuschnitt (2,) angeformten Lage (1) aus Kunststoff, wobei die Umrißform des Zuschnitts (2,) der Umrißform des herzustellenden Gegenstandes entspricht und wobei die Lage (1) aus Kunststoff um die Ränder (5) des Zuschnitts (2,) herumgeformt ist, dadurch gekennzeichnet, daß der Gegenstand zweischichtig aus dem einzigen Zuschnitt (2) und der Lage (1) ausgebildet ist, daß die Lage (1) aus Kunststoff so um die Ränder (5) des Zuschnitts (2) herumgeformt ist, daß die Ränder (35) des Gegenstandes teils durch den Zuschnitt (2) und teils durch die Lage (1) aus Kunststoff gebildet sind, daß die Außenfläche (4) des Zuschnittes (2) mit der Außenfläche (3) der Lage (1) aus Kunststoff bündig verläuft, daß der Zuschnitt (2) überall die gleiche Stärke besitzt und daß die Lage (1) aus Kunststoff als einstückiges räumliches Gebilde ausgeformt ist.

2. Gegenstand nach Patentanspruch 1, dadurch gekennzeichnet, daß der Kunststoff der Lage (1) aus Kunststoff teilweise in den Zuschnitt (2) eingedrungen ist.

3. Gegenstand nach Patentanspruch 1 oder 2, dadurch gekennzeichnet, daß der Kunststoff ein vernetzbarer Kunststoff in Form eines fließfähigen Präpolymeren oder Monomeren ist.

4. Gegenstand nach Patentanspruch 1 oder 2, dadurch gekennzeichnet, daß der Kunststoff ein thermoplastischer Kunststoff ist.

5. Gegenstand, insbesondere Riemen, besonders Uhrband, nach einem der Patentansprüche 1 bis 4, dadurch gekennzeichnet, daß aus der Lage (1) aus Kunststoff eine quer zur Längserstreckung verlaufende Öse (18) einstückig ausgeformt ist.

6. Gegenstand nach einem der Patentansprüche 1 bis 5, dadurch gekennzeichnet, daß die Lage (1) aus Kunststoff aus einem Duroplasten besteht, dem ein Treibmittel zur Aufschäumung des Kunststoffes beigemischt ist.

## Claims

1. An object, in particular a watch strap, ballpoint pen case, jewellery casket, case for games, desk overlay, belt, ball, ring-shaped object, such as push keeper, or the like, with a blank (2) of leather or a material similar to leather, and with a layer (1) of plastic formed onto the blank (2), in which the outline shape of the blank (2) corresponds to the outline shape of the object which is to be produced and in which the layer (1) of plastic is formed around the edges (5) of the blank (2), characterised in that the object is constructed in two layers from the single blank (2) and the layer (1), that the layer (1) of plastic is formed around the edges (5) of the blank (2) so that the edges (35) of the object are formed partly by the blank (2) and partly by the layer (1) of plastic, that the outer surface (4) of the blank (2) runs flush with the outer surface (3) of the layer (1) of plastic, that the blank (2) has the same thickness throughout and that the layer (1) of plastic is formed as a three-dimensional structure in one piece.

2. An object according to Claim 1, characterised in that the plastic of the layer (1) of plastic has partly penetrated into the blank (2).

3. An object according to Claim 1 or 2, characterised in that the plastic is a plastic, able to be cross-linked, in the form of a flowable prepolymer or monomer.

4. An object according to Claim 1 or 2, characterised in that the plastic is a thermoplastic plastic.

5. An object, in particular a strap, especially a watch strap, according to one of Claims 1 to 4, characterised in that from the layer (1) of plastic an eyelet (18) is formed in one piece, running transversely to the longitudinal extent.

6. An object according to one of Claims 1 to 5, characterised in that the layer (1) of plastic consists of a thermosetting plastic to which a propellant is added for the foaming of the plastic.

## Revendications

1. Objet, notamment bracelet-montre, boîtier de stylo, coffret à bijoux, coffret à jeux, sous-main, ceinture, balle, objet annulaire, boucle coulissante ou analogue, comportant une pièce découpée (2) en cuir ou en un matériau ressemblant à du cuir et une couche (1) en matière synthétique formée sur la pièce découpée (2), la forme de contour de la pièce découpée (2) correspondant à la forme de contour de l'objet à fabriquer, et la couche (1) en matière synthétique étant formée autour des bords (5) de la pièce découpée, caractérisé en ce que l'objet est réalisé en deux couches à partir de la pièce découpée unique (2) et de la couche (1), que la couche (1) en matière synthétique est formée autour des bords (5) de la pièce découpée (2) de façon que les bords (35) de l'objet soient constitués en partie par la pièce découpée (2) et en partie par la couche (1) en matière synthétique, que la face extérieure (4) de la pièce découpée (2) est en affleurement avec la face extérieure (3) de la couche (1) en matière synthétique, que la pièce découpée (2) présente partout la même épaisseur et en ce que la couche (1) en matière synthétique est réalisée sous forme de produit spatial en une pièce.

2. Objet selon la revendication 1, caractérisé en ce que la matière synthétique de la couche (1) en matière synthétique a pénétré partiellement dans la pièce découpée (2).

3. Objet selon la revendication 1 ou 2, caractérisé en ce que la matière synthétique est une matière synthétique réticulable sous la forme d'un prépolymère ou monomère coulant.

4. Objet selon la revendication 1 ou 2, caractérisé en ce que la matière synthétique est une matière synthétique thermoplastique.

5. Objet, notamment lanière, en particulier bracelet-montre, selon l'une des revendications 1 à 4, caractérisé en ce qu'il est formé en une pièce dans la couche (1) en matière synthétique un oeillet (18) s'étendant transversalement à l'étendue longitudinale.

6. Objet selon l'une des revendications 1 à 5, caractérisé en ce que la couche (1) en matière synthétique, est constituée d'une résine thermodurcissable à laquelle est ajouté un produit moussant pour faire mousser la matière synthétique.
